# EUROPEAN PATENT APPLICATION

(11) **EP 2 754 547 A1**
(43) Date of publication of application: **16.07.2014**
(21) Application number: 14151008.1
(22) Date of filing: 13.01.2014
(51) Int. Cl.: B29C 70/34, B29C 70/68, B29C 70/88, H05B 3/00, B29L 31/00

(54) **Heating laminate and process for the fabrication of the same**

(30) Priority: 11.01.2013 IT VR20130004
(71) Applicant: Vetrogel S.r.l., 44015 Quartiere di Portomaggiore (FE) (IT)
(72) Inventor: Miani, Marco, 44019 Voghiera (IT)
(74) Representative: Fisauli, Beatrice A. M.

(57) **Abstract**

The present invention refers to a heating laminate comprising a main body made of plastic reinforced by fiberglass and to a process for making said heating laminate.

## Description

The present invention refers in general to a heating laminate and to a process for making said heating laminate. More particularly, the present invention refers to a heating laminate made of plastic reinforced by fiberglass with special construction and heating capacity and to the relative process for its production.

As is known, the market offers laminates used to coat surfaces of various kinds such as panels of trucks, and floors, walls and roofs of motorhomes and caravans. Said laminates are obtained by combining multiple layers made of different materials.

Besides, there exist also laminates with heating capacity since these laminates include electric heating resistors which gain heating power when they are traversed by electric current.

The process of realization of these laminates according to prior art first involves the application of a base layer, known by the term Gelcoat, namely a polyester resin, possibly pigmented, with the function of waterproofing and protection of the inner layers of the laminate. The resins used as base layer may be for instance isophthalic resins, NPG or aliphatic resins since these resin typologies have better mechanical characteristics than other typologies of resin such as the orthophthalic resins.

The Gelcoat layer is poured with a suitable pouring device into a mold in order to obtain a layer having a thickness of a few hundred microns.

Once the Gelcoat layer has hardened after a period of 90 to 120 minutes, it is possible to apply the resin, which usually is an orthophthalic resin, into the mold with a pouring device analogous to the pouring device used before. The quantity of resin to be poured varies according to the thickness to be obtained and may be 500 g/m² to 1200 g/m².

Then, a fiberglass layer of 225 g/m² to 600 g/m² is applied on the resin layers in the mold. The fiberglass layer is applied by directly using suitable rolls or mats.

Then, the electric resistors are inserted in the laminate and precisely, inside the resin layer and inside the fiberglass layer.

After inserting the electric resistors, a covering polyester film is applied, for instance a film known under the mark Mylar® and commercialized by the firm Demezzi, and the so-obtained article is calendered with a suitable equipment. Then, the article is let rest for a period of 3 to 10 hours so that the desired chemical reaction of the aforesaid utilized materials may take place by means of suitable catalysts.

Once the chemical reaction has been completed, the polyester film is removed from the article. Finally, the so-obtained heating laminate made of plastic reinforced by fiberglass is removed.

However, a heating laminate obtained with said process according to the previously described prior art involves problems, especially in relation to the thickness-to-weight ratio. In substance, if a heating laminate including inner resistors is needed, one or more very thick resin layers must be applied so that the whole weight of the finished product increases.

Consequently, the heating laminates according to the prior art have considerable thickness and weight. Besides, said laminates are difficult to control and therefore, they are not very manageable.

In addition, the presence of resistors and conductive elements in the inside of the laminate cause heating and cooling cycles to the laminate, which deteriorates the materials rapidly. In fact, it is possible to see an aesthetic deterioration of the laminate by a different color or different shapes near the resistors.

Other problems are due to the insertion of known resistors inside the laminates by simply inserting such resistors in the phases of production of the laminates made of plastic reinforced by fiberglass according to the prior art. The aim of the present invention is to carry out a heating laminate which is light in proportion to its heating capacity, through a process which is unexpensive and simple to be performed.

Another aim is to carry out a heating laminate which is stable even after many heating cycles.

Said aims and other ones are all achieved according to the invention by a process for the fabrication of a heating laminate. The process comprises the following steps:
- applying a layer of a plastic material on a support mold;
- applying a fiberglass layer;
- applying a heating element of laminar form;
- pouring a layer of polyester resin;
- covering the so-obtained product with a polyester film;
- expelling the air contained in the product covered with the polyester film;
- letting the product rest;
- removing the polyester film from the product; and
- removing the so-obtained laminate from the support mold.

The product obtained at the end of the last phase is a heating laminate according to the present invention.

During said resting phase, after the expulsion of the air, the chemical reaction of the materials takes place in presence of a catalyst. Said resting phase has a very variable duration but typically it lasts from one hour to ten hours. Said chemical reaction is known in the art and therefore, it will not be described in detail.

This process allows to obtain a heating laminate comprising a heating element in the inside of the heating laminate itself and having a laminar shape. Said heating laminate is made so as to have the minimum thickness while maintaining a good heating capacity.

Advantageously, the heating element may comprise a base sheet to which an electrically resistive material and an electrically conductive material are bound, the electrically resistive material and the electrically conductive material being connected to each other in order to carry out a heating element in the desired dimensions and a laminar shape comfortable to carry. The electrically resistive material and the electrically conductive material keep their arrangement easily because they are bound to the base sheet.

More advantageously, the electrically resistive material may be distributed on the base sheet so as to cover, at least partially, the surface of the base sheet itself. This kind of distribution allows to distribute the resistive material on the base sheet according to the desired heating capacity of the wished heating laminate.

Besides, the electrically resistive material may be distributed on the base sheet in the form of a grid so as to obtain an easily reproducible form, or in the form of a serpentine so as to arrange for instance an only wire or band as a serpentine, or partially in the form of a grid and partially in the form of a serpentine. The distribution in the form of a grid is preferable. Advantageously, the electrically conductive material may be distributed on the base sheet in the form of bars or alternatively, preferably in the form of interlaced bands so as to obtain different characteristics of flexibility and different thicknesses.

Besides, the electrically resistive material can be made, at least predominantly, of carbon in order to be easily workable, for instance in the form of carbon fiber and has a higher electrical resistance than the resistors known. The electrically conductive material can be made, at least predominantly, of copper.

Advantageously, the process according to the present invention may comprise also a step for applying a further fiberglass layer between the heating element and the polyester resin so as to improve the surface finish of the finished product.

In addition, the polyester resins used in the process according to the present invention are known per se. Preferably, such resins comprise also styrene units in the polymer chain. Preferably, the amount by weight of polymerized styrene is from 10% to 60% by weight in respect to the weight of the polymer. Besides, the resin may comprise the following components (percentages by weight in respect to the final weight of the resin):
- aluminum hydroxide from 15% to 35%, preferably to 20-30%;
- calcium carbonate from 5% to 20%, preferably to 7-18%;
- cobalt salts from 1 ‰ to 10‰, preferably to 1 -5‰;
- methyl ethyl ketone - acetylacetone in percentages ranging from 30% to 70%;
- hydroxy polyesters/paraffin wax, for instance of type BIK S - 792, preferably from 0.05% to 0.5% and more preferably from 0.1 % to 0.4%.

Advantageously, the process according to the present invention may comprise also a step for applying a protective polyester film following the removal of the polyester film from the product after the complete reaction of the materials so as to better protect the outer surface of the heating laminate. Besides, one or more of the polyester films may be maintained under tension by means of a screw traction system provided with two or more ends of the support mold.

Advantageously, the support mold may be made in advance by means of a process comprising the following steps:
- applying a polyester film on a support;
- applying a fiberglass layer;
- pouring a layer of polyester resin;
- covering the so-obtained product with a polyester film;
- expelling the air contained in the product covered with the polyester film; and
- letting the product rest.

During said resting phase, after the expulsion of the air, a chemical reaction of the materials takes place in the presence of a catalyst Typically, said resting phase lasts 1 to 10 hours,

With such a support mold it is possible to obtain extremely valuable surface finishes of the heating laminate.

More advantageously, the layer of plastic material to be applied on the support mold may be a sheet of polyvinylchloride.

All the aims are also achieved according to the invention by means of a heating laminate comprising a main body made of plastic reinforced by fiberglass. The heating laminate is characterized by the fact of comprising a heating element of laminar form.

Advantageously, the heating element may comprise a base sheet to which an electrically resistive material and an electrically conductive material are bound, the electrically conductive material being in contact with the electrically resistive material. The electrically resistive material may be distributed on the base sheet in order to cover, at least partially, the surface of the base sheet itself.

More advantageously, the electrically resistive material may be distributed on the base sheet in the form of a serpentine or, more preferably, in the form of a grid, or partially in the form of a grid and partially in the form of a serpentine so that its application on the base sheet may be done easily also in a continuous and/or automated process.

Besides, the electrically conductive material is distributed on the base sheet in the form of bars or in the form of interlaced bands or in both forms in order to obtain reduced thicknesses. The distribution in the form of interlaced bands is preferred.

Advantageously, the electrically resistive material is made, at least predominantly, of carbon so as to obtain an electric resistance higher than the resistors known and the electrically conductive material may be made, at least predominantly, of copper.

Further features and details will be better understood from the following description supplied as a non-restricting example as well as from the accompanying drawings wherein:
Fig. 1 shows a schematic view of an element of a heating laminate, made according to the invention;
Fig. 2 shows a schematic view of the element in Figure 1, made according to a preferred variant of the invention.

A heating laminate, made of plastic reinforced by fiberglass and utilized preferably to carry out panels for walls and roofs of motorhomes and caravans, is produced by means of a process of superimposition of more layers of different materials.

According to the invention, at first the process contemplates the preparation of a laminate mold.

A first polyester film, for instance a polyester film of the type known under the trademark Mylar®, is applied on wood multilayer panels or steel panels. This first polyester film is kept under tension by means of a first screw traction system provided at each end of the mold while transversally, the tension is maintained by applying an adhesive tape.

Then, a first fiberglass layer is applied directly with rolls of the prior art whose basic weight may vary from 450 g/m² to 500 g/m².

Then, an additivated polyester resin is applied by pouring.

Then, a second polyester film, for instance a polyester film of the type known under the mark Mylar®, preferably having a thickness of 250 microns, is applied after this second polyester film has been sanded by means of a sanding machine, the sanded surface being directed toward the first fiberglass layer impregnated with additivated polyester resin.

The second polyester film is maintained in tension by means of a second screw traction system provided at each end of the mold while the tension is maintained transversely by applying an adhesive tape.

Then, any air contained in the so-obtained laminate is expelled, for instance by means of a spatulating machine.

Now, it is necessary to wait until the desired chemical reaction takes place. The chemical reaction takes place by means of cold catalysis, preferably at ambient temperature so that the laminate mold is obtained.

The preparation of a heating laminate according to the invention is described below starting from the previously described laminate mold, and precisely, a semi-finished laminate will be described in the preparing phase of the laminate.

Firstly, a first sheet of polyvinylchloride (PVC) is applied and is arranged so as the weft is directed toward the laminate mold. According to a variant of the invention, it is possible to apply a first coat of polyester resin, commonly called gelcoat, on the laminate mold as an alternative to the first PVC sheet or in addition to the first PVC sheet.

Then, a second layer of fiberglass is applied by utilizing the form commonly referred to as rolls and/or mats.

Then, a heating element is applied as described in detail below with reference to the figures.

Then, a third layer of fiberglass is applied by utilizing the form commonly referred to as rolls and/or mats so that the semi-finished laminate is obtained on the laminate mold.

Below is a description of a so-called lamination phase for obtaining a heating laminate according to the invention from the semi-finished laminate described in the preceding phase.

Firstly, a polyester resin is poured.

The polyester resin, preferably comprising polymerized styrene units, comprises one or more of the following components in the following amounts (percentages by weight with respect to the entire resin):
- aluminum hydroxide from 15% to 35%, preferably from 20% to 30%;
- calcium carbonate from 5% to 20%, preferably from 7% to 15%;
- cobalt salts from 1‰ to 10‰, preferably from 1‰ to 7‰;
- methyl ethyl ketone - acetylacetone, from 30% to 70%, preferably from 40% to 50%;
- hydroxy polyesters/paraffin wax, from 0.05% to 0.5%, preferably from 0.1 % to 0.3%.

For instance, concerning the polyester resin, it is possible to use a resin consisting of a mixture of orthophthalic resin and dicyclopentadienic resin. This polymeric resin comprises variable percentages of polymerized styrene units, preferably from 10% to 60% by weight in respect to the weight of the polymer. The polymeric resin comprises also compounds such as coloring pastes or additive substances or both. Said compounds are mixed with the polymeric resin mechanically.

A specific example of composition of coloring pastes and/or additive substances is that composition based on polyester resin containing 14.78% of polymerized styrene units and comprising 25% of aluminum hydroxide, 10% of calcium carbonate, 2‰ of cobalt salts, 50% of methyl ethyl ketone-acetylacetone, 0.2% of hydroxy polyesters/paraffin wax BIK S - 792.

It is intended that said amounts are the preferred amounts for the production of a heating laminate according to the invention but it is also possible to vary the proportions and the percentages of utilization of each of the above-mentioned components depending on the result to be obtained.

Then, a third polyester film is applied, for instance of the type known under the mark Mylar®, after this film has been sanded, for instance by means of a sanding machine, the sanded surface being directed toward the third fiberglass layer impregnated with the polyester resin.

The third polyester film is maintained in tension by means of a third screw traction system provided at each end of the mold.

Then, any air contained in the so-obtained laminate is expelled, for instance by means of a spatulating machine.

Now, it is necessary to wait until the desired chemical reaction takes place. The chemical reaction takes place by means of cold catalysis, preferably at ambient temperature.

Once the reaction has been completed, the third polyester film is removed so that a heating laminate according to the invention is obtained. Besides, it is possible to apply a fourth protective polyester film according to a variant of the invention if a greater surface resistance is desired.

Then, the so-obtained laminate is removed by rolling same. In this phase, it is also possible to cut the heating laminate so as to obtain plates or rolls according to the final destination of the heating laminate.

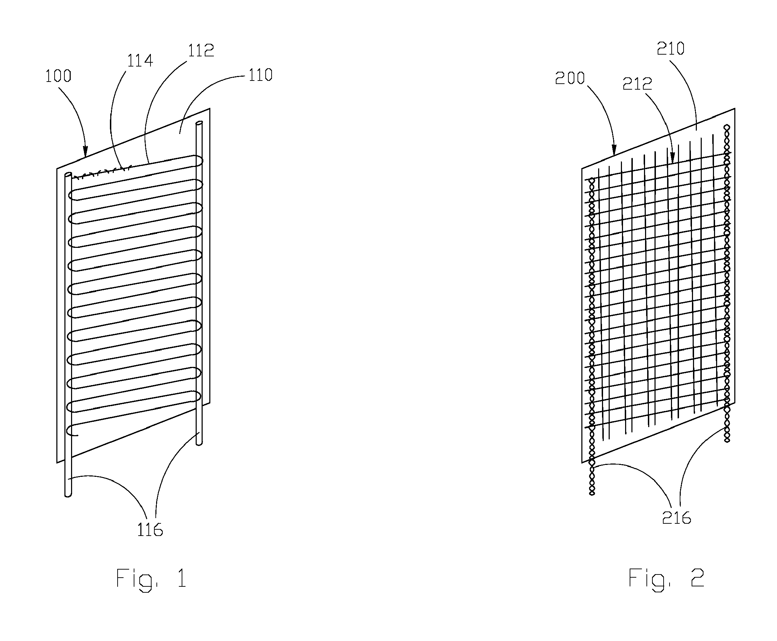

With reference to Figure 1, a heating element according to the invention is described below and with reference to Figure 2, a preferred variant of the heating element is described below according to the invention.

As visible in Figure 1, a heating element 100 comprises a base sheet 110 on which a carbon fiber serpentine 112 is sewn by means of seams 114.

Two copper bars 116 are placed at the ends of the serpentine 112. Each bar has an end that protrudes from the base sheet 110 to conduct electricity to the serpentine 112.

The heating element 100 achieves the aims described above.

According to the preferred variant of the invention as visible in Figure 2, a heating element 200 comprises a base sheet 210 on which a carbon fiber grid 212 is sewn by means of seams, not visible in the figure.

Two interlaced copper bands 216 are placed at the ends of the grid 212. An end of both interlaced bands protrudes from the base sheet 210 to conduct electricity to the grid 212.

The interlaced bands 216 are sewn in the vicinity of the carbon fiber grid 212 so as to come into contact with the grid.

The presence of the interlaced bands 216 allows the circulation of electricity in the carbon fiber grid 212 so that the grid is heated.

In comparison with the serpentine arrangement, the particular arrangement of the grid 12 allows to obtain a better distribution of the carbon fiber and to keep the thickness of the heating element according to the invention as thin as possible.

Even the interlaced bands 216 allow to reduce the thickness in comparison with the bars 116. In addition, the construction of the grid and interlaced bands allows to distribute the heating inside the heating laminate in the best way possible so that the problems of the prior art are avoided.

The particular construction and process of realization of the laminate mold according to the invention allows to obtain a surface aesthetics of great value and a very good aesthetic finish of the heating laminate.

In addition, it is possible to provide variants to be considered as included in the scope of protection of the invention as defined by the following claims. For instance, the semi-finished laminate may be obtained on the laminate mold even without applying the third fiberglass layer in the form commonly referred to as mats and/or rolls so as to obtain a faster realization of the heating laminate.

## Claims

1. Process for the fabrication of a heating laminate comprising the following steps:
a) applying a layer of a plastic material on a support mold;
b) applying a fiberglass layer;
c) applying a heating element (100; 200) of laminar form;
d) pouring a layer of polyester resin;
e) covering the so-obtained product with a polyester film;
f) expelling the air contained in the product covered with the polyester film;
g) letting the product rest;
h) removing the polyester film from the product; and
i) removing the so-obtained product from the support mold.

2. Process for the fabrication of a heating laminate according to the preceding claim, wherein the heating element (100; 200) comprises a base sheet (110; 210) on which an electrically resistive material (112; 212) and an electrically conductive material (116; 216) are bound, the electrically resistive material (112; 212) and the electrically conductive material (116; 216) being connected to each other.

3. Process for the fabrication of a heating laminate according to the preceding claim, wherein the electrically resistive material (112; 212) is distributed on the base sheet (110; 210) so as to cover, at least partially, the surface of the base sheet (110; 210) itself.

4. Process for the fabrication of a heating laminate according to one of claims 2 to 3, wherein the electrically resistive material is distributed on the base sheet (110; 210) in the form of a grid (212) or in the form of a serpentine (112) or partially in the form of a grid and partially in the form of a serpentine.

5. Process for the fabrication of a heating laminate according to one of claims 2 to 4, wherein the electrically conductive material is distributed on the base sheet (110; 210) in the form of bars (116) or in the form of interlaced bands (216) or partially in the form of grid and partially in the form of serpentine.

6. Process for the fabrication of a heating laminate according to one of the preceding claims, wherein there is included a step for applying a further fiberglass layer between the heating element (100; 200) and the polyester resin.

7. Process for the fabrication of a heating laminate according to one of the preceding claims, wherein the polyester resin containing polymerized styrene units comprises (percentages by weight in respect to the weight of the resin):
- aluminum hydroxide from 15% to 35%;
- calcium carbonate from 5% to 20%;
- cobalt salts from 1 ‰ to 10‰;
o methyl ethyl ketone - acetylacetone in percentages ranging from 30% to 70%:
- hydroxy polyesters/paraffin wax from 0.05% to 0.5%.

8. Process for the fabrication of a heating laminate according to one of the preceding claims, wherein the polyester resin containing polymerized styrene units comprises (percentages by weight in respect to the weight of the resin):
- aluminum hydroxide from 20% to 30%;
- calcium carbonate from 7% to 15%;
- cobalt salts from 1‰ to 7‰;
o methyl ethyl ketone - acetylacetone in percentages ranging from 40% to 50%;
- hydroxy polyesters/paraffin wax from 0.1 % to 0.3%.

9. Process for the fabrication of a heating laminate according to one of the preceding claims, wherein there is included a step for applying a protective polyester film following the removal of the polyester film from the product at the end of said step (g).

10. Process for the fabrication of a heating laminate according to one of the preceding claims, wherein at least one of the polyester films is maintained under tension by means of a screw traction system provided at least at two ends of the support mold.

11. Process for the fabrication of a heating laminate according to one of the preceding claims, wherein the support mold has been previously made by the following steps:
a) applying a polyester film on a support;
b) applying a fiberglass layer;
c) pouring a layer of polyester resin;
d) covering the so-obtained product with a polyester film;
e) expelling the air contained in the product which has been covered with the polyester film; and
f) letting the product rest.

12. Heating laminate comprising a main body made of plastic reinforced by fiberglass, a heating laminate (100; 200) of laminar form;
a base sheet (110; 210) on which an electrically resistive material (112; 212) and an electrically conductive material (116; 216) are bound, the electrically conductive material (116; 216) being in contact with the electrically resistive material (112; 212) and the electrically resistive material (112; 212) being distributed on the base sheet (110; 210) in order to cover, at least partially, the surface of the base sheet (110; 210) itself.

13. Heating laminate according to the preceding claim, wherein the electrically resistive material is distributed on the base sheet (110; 210) in the form of a grid (212) or in the form of a serpentine (112) or partially in the form of a grid and partially in the form of a serpentine.

14. Heating laminate according to one of claims 12 to 13, wherein the electrically conductive material is distributed on the base sheet in the form of bars (116) or in the form of interlaced bands (216) or in both of said two forms.

15. Heating laminate according to one of claims 12 to 14, wherein the electrically resistive material is made, at least predominantly, of carbon and wherein the electrically conductive material is made, at least predominantly, of copper.
